(19) Europäisches Patentamt
European Patent Office
Office européen des brevets

(11) **EP 4 519 719 B1**

(12) **EUROPÄISCHE PATENTSCHRIFT**

(45) Veröffentlichungstag und Bekanntmachung des Hinweises auf die Patenterteilung:
**01.04.2026 Patentblatt 2026/14**

(21) Anmeldenummer: **23744131.6**

(22) Anmeldetag: **14.07.2023**

(51) Internationale Patentklassifikation (IPC):
***G01V 8/20*** *(2006.01)*

(52) Gemeinsame Patentklassifikation (CPC):
**G01V 8/20**

(86) Internationale Anmeldenummer:
**PCT/EP2023/069697**

(87) Internationale Veröffentlichungsnummer:
**WO 2024/013387 (18.01.2024 Gazette 2024/03)**

(54) **LICHTGITTER MIT DISTANZMESSUNG**

LIGHT GRID WITH DISTANCE MEASUREMENT

GRILLE LUMINEUSE À MESURE DE DISTANCE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **14.07.2022 EP 22185045**

(43) Veröffentlichungstag der Anmeldung:
**12.03.2025 Patentblatt 2025/11**

(73) Patentinhaber: **Cedes AG**
**7302 Landquart (CH)**

(72) Erfinder:
• **VON ALLMEN, Andri**
 **7302 Landquart (CH)**
• **ZHANG, Nannan**
 **Changshu Jiangsu 215500 (CN)**

(74) Vertreter: **RavensPAT Patentanwälte**
**Partnerschaft mbB**
**Großtobeler Straße 39**
**88276 Berg / Ravensburg (DE)**

(56) Entgegenhaltungen:
CN-A- 111 273 371      DE-A1- 102012 109 985
US-A1- 2005 133 702     US-A1- 2011 204 211
US-A1- 2016 178 794

# EP 4 519 719 B1

**Beschreibung**

Die Erfindung betrifft ein Lichtgitter zur Objekterkennung.

Aus dem Stand der Technik sind Lichtgitter bekannt, welche eine Senderleiste und eine Empfängerleiste aufweisen und zwischen diesen ein Gitter aus Lichtstrahlen zur Objekterkennung ausbilden. Insbesondere können eine oder beide Leisten des Lichtgitters an der Schiebetüre oder den Schiebetüren einer Aufzugskabine befestigt sein, um den Durchgang eines Objekts durch den geöffneten Türbereich zu detektieren.

Aus der CN 111 273 371 A ist ein Lichtvorhang bekannt, bei dem Sender und Empfänger von einer Kontrolleinheit jeweils so angesteuert werden können, dass die Sender mit unterschiedlichen Intensitäten abstrahlen und die Empfänger unterschiedlich verstärken. Zudem kann die Anzahl gescannter Zeitabschnitte während des Empfangs eingestellt werden. Damit kann die Installation des Lichtvorhangs, gerade bei größeren Entfernungen, verbessert werden, um Ungenauigkeiten bei der Montage und Ungenauigkeiten durch Umgebungslicht zu reduzieren oder zu beseitigen.

Es ist Aufgabe der Erfindung, ein Lichtgitter bereitzustellen, das mit geringem Kostenaufwand eine differenziertere Überwachung ermöglicht.

Diese Aufgabe wird, ausgehend von einem Lichtgitter der eingangs genannten Art, durch ein Lichtgitter nach Anspruch 1 gelöst. Vorteilhafte Ausgestaltungen sind in den weiteren abhängigen Ansprüchen angegeben.

Das erfindungsgemäße Lichtgitter ist ein Lichtgitter zur Bestimmung des Abstandes zwischen Sender- und Empfängerleiste mit einer Senderleiste mit einem oder mehreren Senderelementen, welche Strahlung mit einer bestimmten Intensität aussenden, mit einer Empfängerleiste mit einem oder mehreren Empfängerelementen, welche die Strahlung eines zugeordneten Senderelements empfangen, und mit einer Steuereinrichtung zur Ansteuerung der Senderelemente und/oder der Empfängerelemente und zur Auswertung der Empfängerelemente, wobei jeweils das Senderelement und das Empfängerelement oder jeweils wenigstens eines der Senderelemente und/oder wenigstens eines der Empfängerelemente als qualifizierte Sender- und Empfängerelemente ausgebildet sind, wobei das qualifizierte Senderelement oder die qualifizierten Senderelemente dazu ausgebildet sind, unterschiedliche Intensitäten auszusenden und/oder das qualifizierte Empfängerelement oder die qualifizierten Empfängerelemente dazu ausgebildet sind, unterschiedliche Verstärkungen anzuwenden und einen Intensitätswert für die empfangene und verstärkte Strahlung auszugeben, und die Steuereinrichtung dazu ausgebildet ist, unterschiedliche Kombinationen von Intensitäten und Verstärkungen der qualifizierten Sender- und/oder Empfängerelemente anzusteuern und einen Abstandswert in Abhängigkeit von der Summe der resultierenden Intensitätswerte der angesteuerten Kombinationen zu ermitteln.

Dies kann den Vorteil ausbilden, dass der Abstand zwischen der Sender- und Empfängerleiste ermittelt werden kann. Gleichzeitig können aber auch dynamische Abläufe sehr gut verfolgt und analysiert werden. Das Gitter wiederum büßt dabei keinerlei Sicherheitsanforderungen ein.

Das Lichtgitter, insbesondere die Sender- und Empfängerleist, weist noch mindestens ein oder mehrere weitere Sender- und Empfängerelemente auf, die jeweils als einfache Senderelemente und einfache Empfängerelemente ausgebildet sind und welche jeweils als Lichtschranke ausgebildet sind und welche vorzugsweise nicht zu den Kombinationen beitragen und/oder aus denen nicht der Abstandswert ermittelt wird, und/oder welche zu Objektdetektion verwendet werden, und/oder deren einfache Senderelemente mindestens eine Intensität aussenden wie die qualifizierten Senderelemente und deren Empfängerelemente mindestens eine Verstärkung aufweisen wie die qualifizierten Empfängerelemente.

Dies kann den Vorteil ausbilden, dass das Lichtgitter zur Objektdetektion benutzt werden kann. Dies kann den Vorteil ausbilden, dass nicht alle Sender- und Empfängerelemente qualifiziert ausgebildet sein müssen, womit die Komplexität des Lichtgitters sinkt und Kosten gespart werden können. Ein solches Ausführungsbeispiel der Erfindung ermöglicht aber auch einen Kompromiss zwischen genauer Objekterkennung und einem Kostenvorteil, der dadurch zustande kommt, dass nicht alle Sender- bzw. Empfängerelemente mit den gleichen Funktionen ausgestattet sein müssen, sondern einzelne Elemente auch kostengünstiger mit weniger Funktionen ausgestattet sein können.

Erfindungsgemäß ist die Steuereinrichtung dazu ausgebildet, die Kombinationen nacheinander in einer Sequenz anzusteuern und insbesondere die Sequenz periodisch zu wiederholen und insbesondere die Summe von den angesteuerten Kombinationen einer Sequenz zu ermitteln und insbesondere für jede Sequenz einen Abstandswert zu ermitteln. Vorzugsweise ist die Steuereinrichtung dazu ausgebildet alle unterschiedlichen Kombinationen von Intensitäten und Verstärkungen der qualifizierten Sender- und/oder Empfängerelemente anzusteuern, insbesondere jedoch, ohne die höchste Intensität der qualifizierten Senderelemente für die Kombinationen zu verwenden, und/oder diejenigen Intensitäten und Verstärkungen der qualifizierten Sender- und Empfängerelemente für die Objekterkennung zu verwenden, welche den Intensitäten und Verstärkungen von einfachen (nicht qualifizierten) Sender- und/oder Empfängerelementen entsprechen.

Dies kann die Vorteile ausbilden, dass ein Zeitraum feststeht, nachdem der Abstandswert vorliegt, dass der Abstandswert quasikontinuierlich wiederholt ermittelt wird, dass der Abstandswert dynamisch in zeitlicher Abfolge vorliegt. Dies kann die Vorteile ausbilden, dass die Berechnung des Abstandswertes einfach und schnell erfolgen kann. Dies kann den Vorteil ausbilden, dass eine maximale Auflösung bzw. Genauigkeit für den Abstandswert erreicht wird. Dies kann den Vorteil ausbilden, dass die Anzahl der für die Objekterkennung nötigen Sender- und Empfängerelemente durch die qualifizierten Sender- und Empfängerelemente nicht erhöht werden muss.

Vorzugsweise sind die ein oder mehreren qualifizierten Senderelemente dazu ausgebildet jeweils einzeln mehrere unterschiedliche Intensitäten auszusenden, und/oder zueinander unterschiedliche Intensitäten auszusenden, und/oder jeweils eine gleiche Intensität auszusenden, welche insbesondere die höchste Intensität ist und insbesondere der Intensität der nicht qualifizierten Senderelemente entspricht.

Dies kann den Vorteil ausbilden, dass für verschiedene Abstandsbereiche optimierte Intensitäten zur Verfügung stehen, dass die Auflösung des Abstandswertes erhöht wird, dass die Auflösung des Abstandswertes über den gesamten Bereich des Abstandes gleichmässig konstant ist. Dies kann den Vorteil ausbilden, dass die qualifizierten Senderelemente auch für die Objekterkennung verwendet werden können.

Vorzugsweise sind die ein oder mehreren qualifizierten Empfängerelemente dazu ausgebildet, jeweils einzeln mehrere unterschiedliche Verstärkungen anzuwenden, und/oder dieselben unterschiedlichen Verstärkungen anzuwenden, und/oder jeweils eine gleiche Verstärkung anzuwenden, welche insbesondere die höchste ist, und insbesondere der Verstärkung der nicht qualifizierten, d.h. einfachen Empfängerelemente entspricht.

Dies kann den Vorteil ausbilden, dass für verschiedene Abstandsbereiche optimierte Verstärkungen zur Verfügung stehen, dass die Auflösung des Abstandswertes erhöht wird, dass die Auflösung des Abstandswertes über den gesamten Bereich des Abstandes gleichmässig konstant ist. Dies kann den Vorteil ausbilden, dass die qualifizierten Empfängerelemente auch für die Objekterkennung verwendet werden können.

Vorzugsweise weist das Lichtgitter jeweils drei qualifizierte Sender- und Empfängerelemente und dazu noch weitere einfache Sender- und Empfängerelemente auf, welche nicht zu den Kombinationen beitragen und/oder aus denen nicht der Abstandswert ermittelt wird. Vorzugsweise sind die ein oder mehreren qualifizierten Senderelemente dazu ausgebildet, jeweils drei Intensitäten auszusenden, wobei eine Intensität der Intensität der nicht qualifizierten, d.h. einfachen Senderelementen gleich ist, welche zur Objekterkennung vorgesehen sind, und wobei zwei Intensitäten niedriger als die eine gleiche sind und sich jeweils von allen anderen Intensitäten unterscheiden. Vorzugsweise sind die ein oder mehreren qualifizierten Empfängerelemente dazu ausgebildet jeweils die gleichen zwei unterschiedlichen Verstärkungen anzuwenden, wobei die höhere Verstärkung der Verstärkung der nicht qualifizierten, d.h. einfachen Empfängerelementen entspricht, welche zur Objekterkennung vorgesehen sind. Vorzugsweise ist die Steuereinrichtung dazu ausgebildet, zwölf Kombinationen zu bilden aus den drei qualifizierten Sender- und Empfangselementen, den zwei insgesamt unterschiedlichen, niedrigeren Intensitäten der qualifizierten Senderelemente und den zwei unterschiedlichen, jeweils gleichen Verstärkungen der Empfängerelemente. Vorzugsweise ist die Steuereinrichtung dazu ausgebildet, diejenigen Intensitäten und Verstärkungen der qualifizierten Sender- und Empfängerelemente für die Objekterkennung zu verwenden, welche den Intensitäten und Verstärkungen von nicht qualifizierten, d.h. einfachen Sender- und/oder Empfängerelementen entsprechen.

Dies kann den Vorteil ausbilden, dass eine sehr feine Auflösung für den Abstandswert zur Verfügung steht.

Vorzugsweise weist das Lichtgitter eine Sendeeinrichtung auf, die dazu ausgebildet ist, den Abstandswert drahtlos zu versenden.

Dies kann den Vorteil ausbilden, dass das Verhalten der Kabinentür ohne Eingriff in die Steuerung und Elektronik des Aufzugs übertragen und ausgewertet werden kann.

Weitere Merkmale der Erfindung sind in den Zeichnungen angegeben.

Die jeweils genannten Vorteile können sich auch für Merkmalskombinationen realisieren, in deren Zusammenhang sie nicht genannt sind.

Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:

Fig. 1     Lichtgitter
Fig. 2a    Geöffnete Doppelschiebetür einer Aufzugskabine mit Lichtgitter
Fig. 2b    Halb geöffnete Doppelschiebetür wie Fig. 2a
Fig. 2c    Geschlossene Doppelschiebetür wie Fig. 2a
Fig. 3     Diagramm einer Messkurve
Fig. 4     Diagramm mit allen Messkurven
Fig. 5     Diagramm des Abstandswertes

Detaillierte Beschreibung der Zeichnungen:

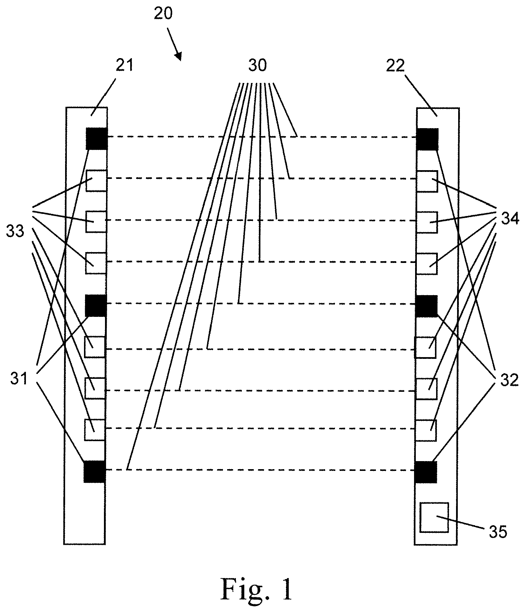

Fig. 1 zeigt ein erfindungsgemässes Lichtgitter 20 mit der Senderleiste 21 und der Empfängerleiste 22. Die Senderleiste 21 weist drei qualifizierte Senderelemente 31 und weitere nicht qualifizierte Senderelemente 33, auf welche IR-Strahlung mit einer bestimmten Intensität aussenden können. Die Empfängerleiste 22 weist drei qualifizierte Empfängerelemente 32 und weitere nicht qualifizierte Empfängerelemente 34 auf. Senderleiste und Empfängerleiste sind jeweils senkrecht und zueinander parallel und in gleicher Höhe gegenüberliegend angeordnet. Jedem qualifizierten Senderelement 31 ist in gleicher Höhe ein qualifiziertes Empfängerelement 32 zugeordnet und zusammen bilden diese einen waagrechen Senderstahl 30 aus. Das Lichtgitter 20 weist zudem eine Steuereinrichtung 35 auf.

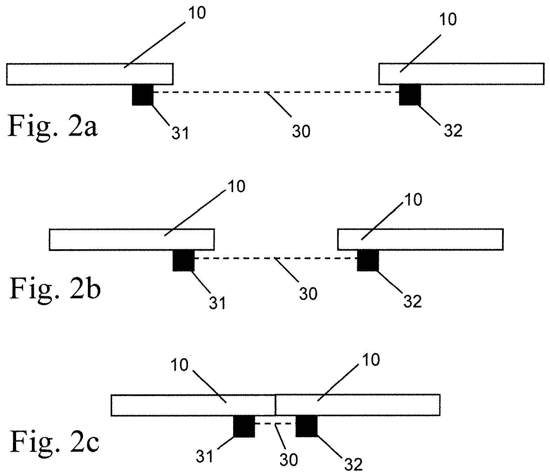

Fig. 2a bis 2c zeigen das Lichtgitter 20 der Fig. 1 an einer Doppelschiebetür 10 einer Aufzugskabine. Die Senderleiste 31 ist an einem Flügel der Doppelschiebetüre befestigt und die Empfängerleiste 32 ist am gegenüberliegenden Flügel der Doppelschiebetür befestigt. Die sonstige Anordnung ist wie in Fig. 1. Senderleiste 31 und Empfängerleiste bewegen sich mit den Doppelschiebetüren mit und bleiben dabei parallel und in gleicher Höhe zueinander angeordnet, sodass die Lichtstrahlen waagrecht und den entsprechenden qualifizierten Sender- und Empfängerelementen zugeordnet verbleiben. Sie verringern ihren Abstand zusammen mit Türen, wenn die Türen sich schliessen, und sie vergrössern ihren Abstand zusammen mit den Türen, wenn die Türen sich öffnen. Der Abstand der Sender- und Empfängerleiste entspricht dem Abstand der beiden Flügel der Doppelschiebetür bis auf einen konstanten Faktor. Fig. 2a zeigt die geöffnete Tür. Fig. 2b zeigt die halb geschlossene Tür. Fig. 2c zeigt die geschlossene Tür.

Die nicht qualifizierten Senderelemente senden mit der Intensität Tx:High und die nicht qualifizierten Empfängerelemente weisen die beiden Verstärkungen Rx:High und Rx:Low auf. Rx:Low ist niedriger als Rx:High. Die Verstärkungen werden gleichzeitig angewendet und getrennt ausgewertet.

Das erste qualifizierte Senderelement T1 kann die Intensität T1:Low1, T1:Mid1, oder T1:High senden, das zweite qualifizierte Senderelement T2 kann die Intensität T2:Low2, T2:Mid2 oder T3:High senden, und das dritte qualifiziere Senderelement T3 kann die Intensität T3:Low3, T3:Mid3 oder T3:High senden. Die Intensitäten Tx:High, T1:High, T2:High und T3:Hight sind gleich gross. Alle anderen Intensitäten sind geringer. Die Abfolge der Stärke der Intensitäten ist aufsteigend: T1:Low1 < T2:Low2 < T3:Low3 < Mid1 < Mid2 < Mid3 < Tx:High. Die drei qualifizierten Empfängerelemente R1, R2, R3 können jeweils die Verstärkungen Rx:Low oder Rx:High anwenden.

Die Steuereinrichtung steuert die nicht qualifizierten Sender- und Empfängerelemente so, dass für Distanzen über 1 m Rx:High und für Distanzen unter 1m wird Rx:Low angewendet wird, letzteres, damit Umspiegelung vermieden werden kann.

Die Steuereinrichtung steuert eine Sequenz von Kombinationen verschiedener Intensitäten und Verstärkungen und wertet diese zur Gewinnung eines Abstandswertes aus. Die höchste Intensität Tx:High wird hierzu nicht verwendet. Die Kombinationen werden jeweils separat angesteuert und ausgewertet. Die Kombinationen sind:

T1:Low1+R1:Low, T1:Mid1+R1:Low, T1:Low1+R1:High, T1:Mid1+R1:High

T2:Low2+R2:Low, T2:Mid2+R2:Low, T2:Low2+R2:High, T2:Mid1+R2:High

T3:Low3+R3:Low, T3:Mid3+R3:Low, T3:Low3+R3:High, T3:Mid1+R2:High

Dies sind 12 Kombinationen.

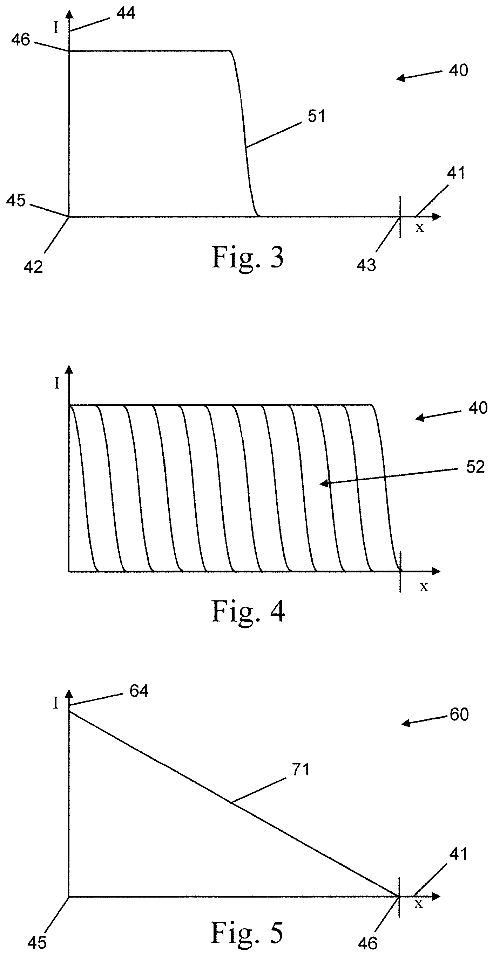

Fig. 3 ist ein Diagramm 40 für die Intensität in Abhängigkeit vom Abstand und zeigt den Messverlauf einer Kombination. Die X-Achse 41 zeigt den Abstand von Senderleiste zu Empfängerleiste. Der Punkt 42 zeigt den minimalen Abstand und der Punkt 43 zeigt dem maximal auswertbaren Abstand. Die Y-Achse 44 zeigt den von einem qualifizierten Empfängerelement ausgegebenen Intensitätswert für eine bestimmte Kombination.

Die Messkurve 51 zeigt beispielhaft eine Kombination mit mittlerer Intensität des qualifizieren Senderelementes und mittlerer Verstärkung des qualifizierten Empfängerelements. Die Messkurve 51 zeigt bei mittlerer Distanz einen sehr steilen Verlauf und ist bei kürzeren Distanzen in Sättigung und bei weiteren Distanzen ohne Signal. Die Messkurve gibt also nur einen kleinen Distanzbereich in guter Auflösung wieder.

Fig. 4 ist ein Diagramm 40 gemäss Fig. 3 und zeigt eine Überlagerung aller zwölf Messkurven 52 für die zwölf Kombinationen.

Die verschiedenen Intensitäten und die Verstärkung Rx:Low sind so gewählt, dass eine weitgehend gleichmässige Abfolge der steilen Verläufe der Messkurven über die Distanz erreicht wird.

Fig. 5 zeigt ein Diagramm für die Summe Intensitätswerte aller zwölf Kombinationen. Die X-Achse ist analog der Fig. 3. Die Y-Achse zeigt die Summe 71 der Intensitätswerte aller zwölf Kombinationen aus Fig. 4. Die Summe zeigt einen weitgehend linearen Verlauf über die gesamte Distanz.

Die Steuereinrichtung addiert die gemessenen und verstärkten Intensitätswerte der zwölf Kombinationen einer Sequenz und gibt einen Abstandswert in Abhängigkeit von der Summe aus. Die Steuereinrichtung wiederholt die Sequenz periodisch und gibt den Abstandswert periodisch aus.

Durch das erfindungsgemässe Lichtgitter kann die Öffnungsbewegung der Kabinentür eines Aufzugs gemessen werden. Ebenso kann der Abstand von beweglichen Begrenzungen eines von einem Lichtvorhang zu überwachenden Durchgangs vom Lichtvorhang selbst gemessen werden.

Das erfindungsgemässe Lichtgitter kann eine Sendereinrichtung aufweisen, welche den Abstandswert drahtlos überträgt, und insbesondere an eine Web Cloud überträgt. Damit stehen die Daten auch für Auswertungen zur Verfügung oder werden für längere Zeit gespeichert, um wie eine Blackbox über Prozessabläufe Auskunft geben zu können. Insbesondere erlaubt dies, eine Aufzugstüre unabhängig von der Aufzugssteuerung zu überwachen.

Bezugszeichenliste:

10    Kabinentür

20    Lichtgitter
21    Senderleiste
22    Empfängerleiste

30    Lichtstrahlen
31    qualifizierte Senderelemente
32    qualifizierte Empfängerelemente
33    einfache Senderelemente
34    einfache Empfängerelemente
35    Steuereinrichtung

40    Diagramm der Intensität in Abhängigkeit vom Abstand
41    X-Achse: Abstand von Sender- und Empfängerleiste
42    Minimalabstand
43    Maximalabstand
44    Y-Achse: Empfangene und verstärkte Intensität
45    Keine Detektion
46    Sättigung

51    Messkurve für eine Intensität und eine Verstärkung
52    12 Messkurven aus 6 Intensitäten und 2 Verstärkungen

60    Diagramm der Summe der empfangenen 12 Messkurven
64    Y-Achse: Summe der verstärkten Intensitäten

71    Summe der 12 Messkurven von 6 Intensitäten und 2 Verstärkungen

**Patentansprüche**

**1.**  Lichtgitter

zur Bestimmung des Abstandes zwischen Sender- und Empfängerleiste
mit einer Senderleiste mit einem oder mehreren **Senderelementen,**

welche Strahlung mit einer bestimmten Intensität aussenden,
mit einer Empfängerleiste mit einem oder mehreren **Empfängerelementen,** welche die Strahlung eines zugeordneten Senderelements empfangen, und
mit einer **Steuereinrichtung**

zur Ansteuerung der Senderelemente und/oder der Empfängerelemente und
zur Auswertung der Empfängerelemente,

wobei

jeweils das Senderelement und das Empfängerelement oder jeweils wenigstens eines der Senderelemente und/oder wenigstens eines der Empfängerelemente als qualifizierte Sender- und Empfängerelemente ausgebildet sind, wobei

das qualifizierte Senderelement oder die qualifizierten Senderelemente dazu ausgebildet sind, unterschiedliche Intensitäten auszusenden, und/oder
das qualifizierte Empfängerelement oder die qualifizierten Empfängerelemente dazu ausgebildet sind, unterschiedliche Verstärkungen anzuwenden und einen Intensitätswert für die empfangene und verstärkte Strahlung auszugeben,

wobei das Lichtgitter noch mindestens ein oder mehrere weitere Sender- und Empfängerelemente aufweist, die jeweils als einfache Senderelemente und einfache Empfängerelemente ausgebildet sind und welche jeweils als Lichtschranke ausgebildet sind,
**dadurch gekennzeichnet, dass**

die Steuereinrichtung dazu ausgebildet ist,
unterschiedliche Kombinationen von Intensitäten und Verstärkungen der qualifizierten Sender- und/oder Empfängerelemente anzusteuern und einen Abstandswert in Abhängigkeit von der Summe der resultierenden Intensitätswerte der angesteuerten Kombinationen zu ermitteln,
wobei die Steuereinrichtung dazu ausgebildet ist,
die Kombinationen nacheinander in einer Sequenz anzusteuern und die Sequenz periodisch zu wiederholen und die Summe von den angesteuerten Kombinationen einer Sequenz zu ermitteln
und für jede Sequenz einen Abstandswert zu ermitteln.

2. Lichtgitter nach Anspruch 1, **dadurch gekennzeichnet, dass**
die ein oder mehreren weiteren Sender- und Empfängerelemente,

die jeweils als einfache Senderelemente und einfache Empfängerelemente ausgebildet sind
und welche jeweils als Lichtschranke ausgebildet sind,
vorzugsweise nicht zu den Kombinationen beitragen und/oder dass aus diesen nicht der Abstandswert ermittelt wird,
und/oder dass diese zur Objektdetektion verwendet werden,
und/oder dass deren einfache Senderelemente mindestens eine Intensität aussenden wie die qualifizierten Senderelemente und deren Empfängerelemente mindestens eine Verstärkung aufweisen wie die qualifizierten Empfängerelemente.

3. Lichtgitter nach einem Anspruch 1 oder 2, **dadurch gekennzeichnet, dass**
die Steuereinrichtung dazu ausgebildet ist,
alle unterschiedlichen Kombinationen von Intensitäten und Verstärkungen der qualifizierten Sender- und/oder Empfängerelemente anzusteuern.

4. Lichtgitter nach Anspruch 3, **dadurch gekennzeichnet, dass** die Steuereinrichtung dazu ausgebildet ist,
alle unterschiedlichen Kombinationen von Intensitäten und Verstärkungen der qualifizierten Sender- und/oder Empfängerelemente anzusteuern, jedoch ohne die höchste Intensität der qualifizierten Senderelemente für die Kombinationen zu verwenden,
oder diejenigen Intensitäten und Verstärkungen der qualifizierten Sender- und Empfängerelemente für die Objekterkennung zu verwenden, welche den Intensitäten und Verstärkungen von einfachen Sender- und/oder Empfängerelementen entsprechen.

5. Lichtgitter nach einem der Ansprüche 1 bis 4, **dadurch gekennzeichnet, dass** die ein oder mehreren qualifizierten Senderelemente dazu ausgebildet sind, jeweils einzeln mehrere unterschiedliche Intensitäten auszusenden, oder zueinander unterschiedliche Intensitäten auszusenden, oder jeweils eine gleiche Intensität auszusenden

6. Lichtgitter nach Anspruch 5, **dadurch gekennzeichnet, dass** die ein oder mehreren qualifizierten Senderelemente dazu ausgebildet sind, eine Intensität auszusenden, welche die höchste Intensität ist und der Intensität der einfachen Senderelemente entspricht.

7. Lichtgitter nach einem Ansprüche 1 bis 6, **dadurch gekennzeichnet, dass** die ein oder mehreren qualifizierten Empfängerelemente dazu ausgebildet sind, jeweils einzeln mehrere unterschiedliche Verstärkungen anzuwenden, oder dieselben unterschiedlichen Verstärkungen anzuwenden,oder jeweils eine gleiche Verstärkung anzuwenden.

8. Lichtgitter nach Anspruch 7, **dadurch gekennzeichnet, dass** die ein oder mehreren qualifizierten Empfängerelemente dazu ausgebildet sind, eine Verstärkung anzuwenden, welche die höchste ist, und der Verstärkung der einfachen Empfängerelemente entspricht.

9. Lichtgitter nach einem der Ansprüche 1 bis 8, **dadurch gekennzeichnet, dass**

das Lichtgitter jeweils drei qualifizierte Sender- und Empfängerelemente aufweist und noch weitere einfache Sender- und Empfängerelemente aufweist, welche nicht zu den Kombinationen beitragen und/oder aus denen nicht der Abstandswert ermittelt wird, die ein oder mehreren qualifizierten Senderelemente dazu ausgebildet sind, jeweils drei Intensitäten auszusenden, wobei eine Intensität der Intensität der einfachen Senderelementen gleich ist, welche zur Objekterkennung vorgesehen sind, und wobei zwei Intensitäten niedriger als die eine gleiche sind und sich jeweils von allen anderen Intensitäten unterscheiden, und die ein oder mehreren qualifizierten Empfängerelemente dazu ausgebildet sind, jeweils die gleichen zwei unterschiedlichen Verstärkungen anzuwenden, wobei die höhere Verstärkung der Verstärkung der einfachen Empfängerelementen entspricht, welche zur Objekterkennung vorgesehen sind, und die Steuereinrichtung dazu ausgebildet ist, zwölf Kombinationen zu bilden aus den drei qualifizierten Sender- und Empfangselementen, den zwei insgesamt unterschiedlichen, niedrigeren Intensitäten der qualifizierten Senderelementen und den zwei unterschiedlichen, jeweils gleichen Verstärkungen der Empfängerelementen und diejenigen Intensitäten und Verstärkungen der qualifizierten Sender- und Empfängerelemente für die Objekterkennung zu verwenden welche den Intensitäten und Verstärkungen von einfachen Sender- und/oder Empfängerelementen entsprechen.

10. Lichtgitter nach einem der Ansprüche 1 bis 9, **dadurch gekennzeichnet, dass** das Lichtgitter eine Sendeeinrichtung aufweist, die dazu ausgebildet ist, den Abstandswert drahtlos zu versenden.

**Claims**

1. Light grid for determining the distance between transmitter and receiver strips, having a transmitter strip with one or more transmitter elements

   that emit radiation at a specific intensity,
   having a receiver strip with one or more receiver elements
   that receive the radiation from an associated transmitter element, and having a control device
   for controlling the transmitter elements and/or the receiver elements and for evaluating the receiver elements, wherein
   in each case the transmitter element and the receiver element or in each case at least one of the transmitter elements and/or at least one of the receiver elements are designed as qualified transmitter and receiver elements, wherein
   the qualified transmitter element or the qualified transmitter elements are designed to emit different intensities, and/or the qualified receiver element or the qualified receiver elements are designed to apply different gains and output an intensity value for the received and amplified radiation, wherein the light grid furthermore comprises at least one or more further transmitter and receiver elements, which are each designed as simple transmitter elements and simple receiver elements and which are each designed as a light curtain,
   **characterized in that**
   the control device is designed
   to set different combinations of intensities and gains of the qualified transmitter and/or receiver elements
   and to ascertain a distance value on the basis of the sum of the resultant intensity values of the set combinations, wherein the control device is designed
   to set the combinations successively in a sequence and repeat the sequence periodically
   and to ascertain the sum of the set combinations of a sequence
   and to ascertain a distance value for each sequence.

2. Light grid according to Claim 1, **characterized in that**

   the one or more further transmitter and receiver elements,

which are each designed as simple transmitter elements and simple receiver elements
and which are each designed as a light curtain,
preferably do not contribute to the combinations and/or in that the distance value is not ascertained therefrom,
and/or **in that** they are used for object detection,
and/or **in that** their simple transmitter elements emit at least one intensity like the qualified transmitter elements
and their receiver elements have at least one gain like the qualified receiver elements.

3. Light grid according to Claim 1 or 2, **characterized in that**

the control device is designed
to set all different combinations of intensities and gains of the qualified transmitter and/or receiver elements.

4. Light grid according to Claim 3, **characterized in that** the control device is designed

to set all different combinations of intensities and gains of the qualified transmitter and/or receiver elements
without using the highest intensity of the qualified transmitter elements for the combinations,
or to use those intensities and gains of the qualified transmitter and receiver elements for object detection that
correspond to the intensities and gains of simple transmitter and/or receiver elements.

5. Light grid according to any of Claims 1 to 4, **characterized in that** the one or more qualified transmitter elements are designed to each emit a plurality of different intensities on an individual basis or to emit mutually different intensities or to each emit an identical intensity.

6. Light grid according to Claim 5, **characterized in that** the one or more qualified transmitter elements are designed to emit an intensity which is the highest intensity and corresponds to the intensity of the simple transmitter elements.

7. Light grid according to any of Claims 1 to 6, **characterized in that** the one or more qualified receiver elements are designed to each apply a plurality of different gains on an individual basis or to apply the same different gains or to each apply an identical gain.

8. Light grid according to Claim 7, **characterized in that** the one or more qualified receiver elements are designed to apply a gain which is the highest gain and corresponds to the gain of the simple receiver elements.

9. Light grid according to any of Claims 1 to 8, **characterized in that** the light grid in each case comprises three qualified transmitter and receiver elements and furthermore comprises simple transmitter and receiver elements that do not contribute to the combinations and/or from which the distance value is not ascertained, the one or more qualified transmitter elements are designed to emit three intensities in each case, wherein one intensity is equal to the intensity of the simple transmitter elements that are provided for object detection, and wherein two intensities are lower than the identical intensity and in each case differ from all other intensities, and the one or more qualified receiver elements are designed to apply the same two different gains in each case, wherein the higher gain corresponds to the gain of the simple receiver elements that are provided for object detection, and the control device is designed to form twelve combinations from the three qualified transmitter and receiver elements, the two altogether different, lower intensities of the qualified transmitter elements and the two different, in each case identical gains of the receiver elements and to use those intensities and gains of the qualified transmitter and receiver elements that correspond to the intensities and gains of simple transmitter and/or receiver elements for object detection.

10. Light grid according to any of Claims 1 to 9, **characterized in that** the light grid comprises a transmission device that is designed to send the distance value wirelessly.

## Revendications

1. Barrière immatérielle destinée à déterminer la distance entre des barres d'émetteurs et de récepteurs, comprenant une barre d'émetteurs comportant un ou plusieurs éléments émetteurs,

lesquels émettent un rayonnement avec une intensité déterminée,
comprenant une barre de récepteurs comportant un ou plusieurs éléments récepteurs,
lesquels reçoivent le rayonnement d'un élément émetteur associé, et comprenant un dispositif de commande

destiné à commander les éléments émetteurs et/ou les éléments récepteurs et à évaluer les éléments récepteurs, respectivement l'élément émetteur et l'élément récepteur, ou respectivement au moins l'un des éléments émetteurs et/ou au moins l'un des éléments récepteurs, étant réalisés sous la forme d'éléments émetteurs et récepteurs qualifiés,

l'élément émetteur qualifié ou les éléments émetteurs qualifiés étant configurés pour émettre des intensités différentes et/ou l'élément récepteur qualifié ou les éléments récepteurs qualifiés étant configurés pour appliquer des gains différents et délivrer une valeur d'intensité pour le rayonnement reçu et amplifié, la barrière immatérielle possédant encore au moins un ou plusieurs éléments émetteurs et récepteurs supplémentaires, qui sont respectivement réalisés sous la forme d'éléments émetteurs simples et d'éléments récepteurs simples et qui sont respectivement réalisés sous la forme d'une barrière photoélectrique,

**caractérisée en ce que**

le dispositif de commande est configuré pour

commander différentes combinaisons d'intensités et de gains des éléments émetteurs et/ou récepteurs qualifiés et déterminer une valeur de distance en fonction de la somme des valeurs d'intensité résultantes des combinaisons commandées,

le dispositif de commande étant configuré pour

commander les combinaisons successivement en une séquence et répétez périodiquement la séquence et déterminer la somme des combinaisons commandées d'une séquence

et déterminer une valeur de distance pour chaque séquence.

2. Barrière immatérielle selon la revendication 1, **caractérisée en ce que**

l'un ou les plusieurs éléments émetteurs et récepteurs supplémentaires,
qui sont respectivement réalisés sous la forme d'éléments émetteurs simples et d'éléments récepteurs simples et qui sont respectivement réalisés sous la forme d'une barrière photoélectrique,
ne contribuent de préférence pas aux combinaisons et/ou en ce que la valeur de distance n'est pas déterminée à partir de ceux-ci,
et/ou **en ce qu'**ils sont utilisés pour la détection d'objets,
et/ou **en ce que** leurs éléments émetteurs simples émettent au moins une intensité telle que celle des éléments émetteurs qualifiés et leurs éléments récepteurs présentent au moins un gain tel que celui des éléments récepteurs qualifiés.

3. Barrière immatérielle selon la revendication 1 ou 2, **caractérisée en ce que**

le dispositif de commande est configuré pour
commander toutes les combinaisons différentes d'intensités et de gains des éléments émetteurs et/ou récepteurs qualifiés.

4. Barrière immatérielle selon la revendication 3, **caractérisée en ce que** le dispositif de commande est configuré pour

commander toutes les combinaisons différentes d'intensités et de gains des éléments émetteurs et/ou récepteurs qualifiés, toutefois sans utiliser l'intensité maximale des éléments émetteurs qualifiés pour les combinaisons,
ou utiliser les intensités et les gains des éléments émetteurs et récepteurs qualifiés pour la reconnaissance d'objets qui correspondent aux intensités et aux gains des éléments émetteurs et/ou récepteurs simples.

5. Barrière immatérielle selon l'une des revendications 1 à 4, **caractérisée en ce que** l'un ou les plusieurs éléments émetteurs qualifiés sont configurés pour émettre chacun individuellement plusieurs intensités différentes, ou pour émettre des intensités différentes les unes aux autres, ou pour émettre chacun une intensité identique.

6. Barrière immatérielle selon la revendication 5, **caractérisée en ce que** l'un ou les plusieurs éléments de l'émetteur qualifiés sont configurés pour émettre une intensité qui est l'intensité la plus élevée et qui correspond à l'intensité des éléments émetteurs simples.

7. Barrière immatérielle selon l'une des revendications 1 à 6, **caractérisée en ce que** l'un ou les plusieurs éléments récepteurs qualifiés sont configurés pour appliquer chacun individuellement plusieurs gains différents, ou appliquer les mêmes gains différents, ou appliquer chacun un gain identique.

8. Barrière immatérielle selon la revendication 7, **caractérisée en ce que** l'un ou les plusieurs éléments récepteurs qualifiés sont configurés pour appliquer un gain qui est le plus élevé et qui correspond au gain des éléments récepteurs simples.

9. Barrière immatérielle selon l'une des revendications 1 à 8, **caractérisée en ce que** la barrière immatérielle possède respectivement trois éléments émetteurs et récepteurs qualifiés et possède encore des éléments émetteurs et récepteurs simples supplémentaires, lesquels ne contribuent pas aux combinaisons et/ou à partir desquels la valeur de distance n'est pas déterminée, l'un ou les plusieurs éléments émetteurs qualifiés étant configurés pour émettre respectivement trois intensités, une intensité étant égale à l'intensité des éléments émetteurs simples qui sont prévus pour la détection d'objets et deux intensités étant inférieures à cette intensité égale et se distinguant respectivement de toutes les autres intensités, et l'un ou les plusieurs éléments récepteurs qualifiés étant configurés pour appliquer respectivement les deux mêmes gains différentes, le gain le plus élevé correspondant au gain des éléments récepteurs simples qui sont prévus pour la détection d'objets, et le dispositif de commande étant configuré pour former douze combinaisons à partir des trois éléments émetteurs et récepteurs qualifiés, des deux intensités les plus faibles globalement différentes des éléments émetteurs qualifiés et des deux gains différents, respectivement identiques, des éléments récepteurs, et d'utiliser pour la détection d'objets les intensités et les gains des éléments émetteurs et récepteurs qualifiés qui correspondent aux intensités et aux gains des éléments émetteurs et/ou récepteurs simples.

10. Barrière immatérielle selon l'une des revendications 1 à 9, **caractérisée en ce que** la barrière immatérielle possède un dispositif émetteur qui est configuré pour transmettre sans fil la valeur de distance.

Fig. 1

10

10

**Fig. 2a**

31    30    32

10

10

**Fig. 2b**

31    30    32

10    10

**Fig. 2c**

31    30    32

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 111273371 A